# EUROPEAN PATENT SPECIFICATION

(11) **EP 1 332 928 B1**
(45) Date of publication and mention of the grant of the patent: **31.10.2007**
(21) Application number: 03002529.0
(22) Date of filing: 05.02.2003
(51) Int. Cl.: B60R 21/16

(54) **Method of folding an airbag**
Verfahren zum Falten eines Gassackes
Procédé de pliage d'un coussin gonflable

(30) Priority: 05.02.2002 DE 10204643
(43) Date of publication of application: 06.08.2003
(73) Proprietor: KEY SAFETY SYSTEMS, INC., Sterling Heights, MI 48314 (US)
(72) Inventor: Lincoln, Paul, 55283 Nierstein (DE)
(74) Representative: Müller-Boré & Partner Patentanwälte

(56) References cited:
- EP-A- 0 712 760
- EP-A- 0 825 072
- EP-A- 0 965 498
- WO-A-99/67108
- DE-A- 19 535 564
- GB-A- 2 342 322
- GB-A- 2 371 025
- US-A- 5 360 387
- US-B1- 6 248 052
- US-B1- 6 327 838

## Description

The invention relates to a process for folding an airbag of an airbag module, having the steps of: arranging the airbag and a base plate on a receiver of a folding device, with the airbag secured to the base plate, and stretching the airbag out. The invention also relates to a device for performing this process and to an airbag module having a base plate and an airbag secured to the latter.

In known processes for folding an airbag of an airbag module, first the airbag is secured to a base plate, from which it is then stretched out on a folding device into at least one outer tube. The stretched-out airbag located in the outer tube is then folded by a die or piston of the folding device moving into the outer tube. During folding, the airbag is thus laid in a chaotic folding arrangement.

It is known from DE 298 11 042 U1 to displace a die through the base plate into the airbag to stretch out the airbag. Introducing a die in this way is only possible with base plates of airbag modules which are not substantially closed in the direction of stretching out the airbag, however.

US-5,360,387 relates to an automated system for folding a vehicle airbag, wherein a machine having numerous movable arms controlled by a controller is provided, an edge folding assembly of the machine has five arms, including a center arm, two outer blades and two outwardly facing U-channel forks, which reside between respective outer blades and the center arm, whereby the edge folding assembly moves forward so that all of its five arms engage an unfolded airbag.

EP 0 712 760 relates to a method for folding a gas bag for a vehicle occupant protection system, wherein the airbag is folded from a deflated, flattened and spread-out condition into a shape adapted to the interior space of a receiving compartment by substantially rotating the junction section relative to the securing section of the airbag.

EP 0 825 072 relates to a method for folding an airbag having the steps of inserting a first plunger into an opening in a lower half of the airbag such that it pushes the upper part away from the lower part, the upper part is then clamped between the first plunger and the second plunger, thereafter the airbag is folded upward such that a plurality of radial folds is created, which are then folded inward. Following that, a hollow die is then placed over the folded airbag, whereas the upper end of the airbag in a central portion of the airbag is twisted in different directions while a third plunger is placed over the end face of the folded airbag.

DE 195 35 564 relates to a method for folding an airbag, wherein the empty airbag is spread out and gathered in towards a center to achieve a folded airbag, wherein the airbag is gathered inside a fixed vertical profiled section having a top and a bottom separated by a distance, and wherein only a view gathering tools and only a view operations are necessary to gather the airbag.

A process for folding an airbag of an airbag module, is known from WO99/67108, having the steps of: arranging the airbag and a base plate on a receiver of a folding device in the form of a piston, with the airbag secured to the base plate; arranging a housing of the airbag module on a holding device of the folding device in the form of a substantially vertically arranged tube with circular cross-section; fixing a portion of the airbag remote from the base plate to an upper part of the housing of the airbag module. In this known process, the cylindrical holding device with airbag module are movable substantially vertically relative to the receiver. In one position of the folding process the airbag is stretched out within the tubular holding device between the portion fixed to the airbag module housing and the portion fixed to the base plate. No indication is given of how to fix the portion of the airbag remote from the base plate to the upper part of the airbag module housing.

It is the object of the invention to provide a process and a device of folding an airbag of an airbag module in which the airbag can be stretched out in a simple and low-cost way before it is folded.

This object is achieved in accordance with the invention by a process according to Claim 1, a device according to Claim 5 and an airbag module according to Claim 6.

According to the invention, before the airbag is folded inside an outer tube, a portion of the airbag remote from the base plate is to be arranged or mounted or secured on or to a holding device of the folding device, and the airbag is subsequently to be stretched out by pulling this secured portion. The pulling is performed by means of a movement of the holding device relative to the receiver. During this movement, alternatively, the holding device or the receiver may be moved individually or in combination relative to one another. In contrast to known processes, according to the invention the airbag is not pushed from the inside outwards in the direction of stretching out, but rather it is pulled on its outside with the aid of a holding device. This pulling may be performed in a manner giving a reliable procedure, using a device that can be produced at low cost.

The process according to the invention, the associated device and the correspondingly shaped airbag module are particularly useful if the base plate of the airbag module is substantially closed in the direction of stretching out. According to the invention, with an airbag module of this kind the airbag can be stretched out although no die or piston can be pushed in through the substantially closed base plate for the purpose of stretching out the airbag.

The process according to the invention can also be used with airbag modules, in which an inflator is already pre-mounted on the base plate before the process steps of stretching out and folding. The pre-mounted inflator makes it impossible for a die or piston still to be pushed in through the base plate. As a result of the already pre-mounted inflator, the airbag of the airbag module cannot be inflated to stretch out the airbag in the interior by increasing the pressure.

The process according to the invention and the associated device may thus be used for the greatest variety of types of airbag module.

In an advantageous further development of the process according to the invention, because of this advantage it is provided that, before the step of stretching out the airbag, a inflator connected to the base plate already is or has been arranged on the receiver of the device.

According to the invention, the portion of the airbag is secured to the holding device by means of a releasable connection, in particular by bringing the portion of the airbag into engagement or hooked arrangement with the holding device. Suitable releasable connections are hook-and-eye connections. It is also possible to attach or stitch a connection face of a hook-and-burr closure to the portion of the airbag to be secured, and for a second connection face of the hook-and-burr closure, permanently attached to the holding device, to be merely pressed against this for the purpose of connection to make the releasable connection. To release the hook-and-burr closure, an opening may be made on the holding device, which may fix the portion of the airbag in position, while the holding device is removed when the hook-and-burr closure is opened. Alternatively, the hook-and-burr closure may be used in combination with a cover of the airbag module, only being released when the airbag is activated. Alternatively, it is also possible for a type of gripper device, for example a tong-shaped gripper device, to be provided so that the airbag only needs to have a tab where it is gripped, without the tab having to have holes or the like, however. It is also possible to provide a type of suction device, so that the tab can be dispensed with altogether and the suction device consequently takes hold of a particular portion or region of the airbag.

To push the folded airbag, once it has been folded, into a housing of the airbag module or cover, it is advantageous if the said connection is released at the end of the step or after the step of stretching out the airbag. Release can be performed particularly simply by withdrawing a first connection element between the airbag and the holding device. The folded airbag can then be installed independently of the holding device.

In addition, a cover is provided on the airbag module on the holding device, and this cover remains on the airbag after the latter has been stretched out and folded. It is then possible to secure the portion of the airbag directly to the cover of the airbag module and in some cases to construct this connection such that it is only released when the airbag mounted in a vehicle is activated. By releasing the connection, the activated airbag can unfold freely, and exert its protective action with respect to a passenger of the vehicle.

Between the portion of the airbag to be secured and the cover, particularly advantageously, a releasable connection may be formed with the aid of one or two eyes made on the airbag and a rod guided on the cover. The rod forms a first connection element that cooperates with the eye or eyes on the airbag, as second connection elements. By withdrawing the rod from the eyes at the end of the folding procedure, the connection between the airbag and the cover may be released, so that when the airbag is activated it may unfold independently of the cover. At the same time, the cover is already pre-mounted on the folded airbag for further assembly of the airbag module.

Exemplary embodiments of the invention will be explained below in more detail with reference to the attached diagrammatic drawings, in which:
Fig. 1 shows a first exemplary embodiment of a device according to the invention for folding an airbag of an airbag module, in a side view in partial section;
Fig. 2 shows a second exemplary embodiment of a device according to the invention for folding an airbag of an airbag module, in a view according to Fig. 1, during a first process step;
Fig. 3 shows the view according to Fig. 2, in a second process step;
Fig. 4 shows a third exemplary embodiment of a device for folding an airbag of an airbag module, which is not covered by the invention; and
Fig. 5 shows a plan view according to Fig. 4, on a larger scale.

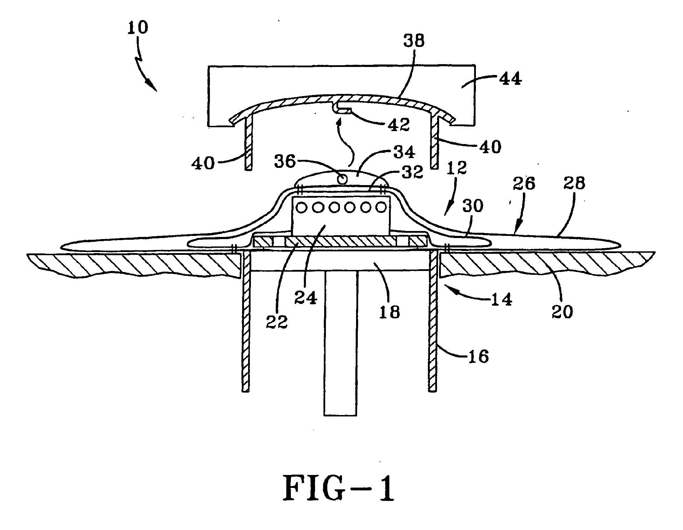

Fig. 1 illustrates a device 10 for folding an airbag of an airbag module 12, in particular a driver airbag module. The device 10 has a receiver 14 with a substantially vertically arranged cylinder or tube 16 and a piston or die 18 arranged displaceably therein. Constructed around the upper edge (as seen in Fig. 1) of the tube 16 is a support 20.

The airbag module 12 is arranged on the receiver 14. It has a base plate 22 which lies on the piston 18, and in the centre of the base plate 22, remote from the piston 18, there is constructed a portion 24 for arranging or inserting a inflator (not illustrated). Advantageously, instead of the portion 24, the inflator itself may be used with a base plate arranged thereon. An airbag 26 is secured to the base plate 22 and includes an outer sheath 28 and restraining tapes 30 arranged therein. The airbag 26 is laid out with its outer sheath 28 over the base plate 22 and is spread out over the support 20. A portion 32 of the outer sheath 28 of the airbag 26 remote from the base plate 22 is provided with a tab 34 which projects upwards (as seen in Fig. 1) from the outer sheath 28. A through opening 36 is made in the tab 34 approximately in the centre.

Above the tab 34 (as seen in Fig. 1), a cover 38 in the form of a cap of the airbag module 12 is arranged on the device 10. The cover 38 has downwardly projecting webs 40 and, in the centre of its underside, a hook 42 which projects downwards (as seen in Fig. 1). The cover 38 is supported by a holding device 44 that is movable substantially vertically relative to the receiver 14 of the device 10.

With the aid of the device 10, the airbag 26 of the airbag module 12 can first be stretched out and then folded. To be able to perform these operations, first of all the tab 34 is hooked onto the hook 42 of the cover 38, manually or automatically, at the through opening 36. Then, the piston 18 moves in the tube 16, as a result of which the base plate 22 moves downwards (as seen in Fig. 1). During this relative movement between the receiver 14 and the holding device 44, the portion 32 of the airbag 26 is pulled away from the base plate 22, and the outer sheath 28 of the airbag 26 is at the same time stretched out until the restraining tapes 30 are substantially fully taut.

At the same time, the tube 16 may be moved upwards and/or the cover 38 with the holding device 44 may be moved downwards until the webs 40 of the cover 38 are set on the upper rim of the tube 16. Then, the piston 18 is moved upwards (as seen in Fig. 1) inside the tube 16. During this movement, the airbag 26 is now laid in chaotically arranged folds inside the tube 16 and at the same time pushed into the cover 38 from below.

The through opening 36 in the tab 34 is constructed such that when the airbag module 12 having the airbag 26 and installed in a vehicle is activated and unfolded, the connection between the tab 34 and the hook 42 is released automatically. Once the connection has been automatically released, the airbag 26 can unfold freely, independently of the cover 38.

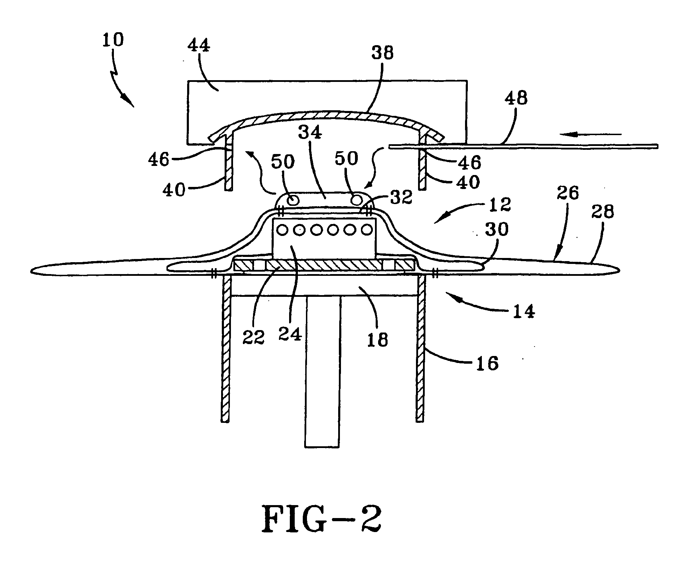

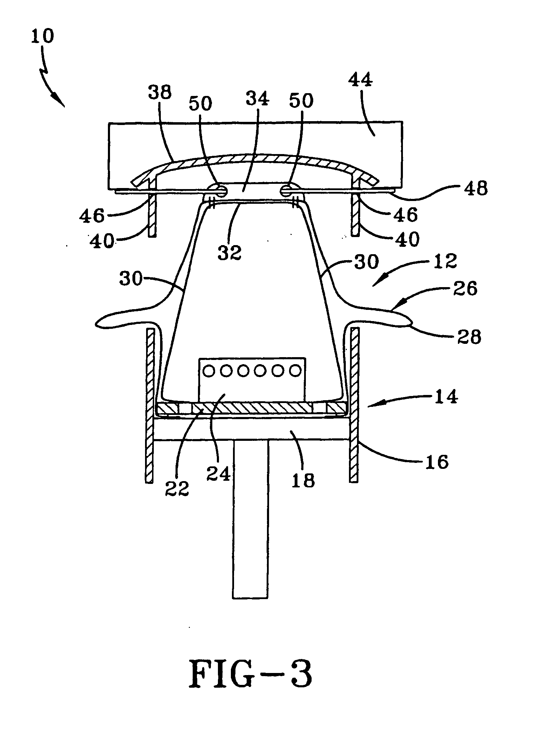

Figs. 2 and 3 illustrate a second embodiment of the device 10, which is shaped in a manner corresponding to the device 10 illustrated in Fig. 1 as regards the receiver 14.

For the device 10 according to Figs. 2 and 3, the associated airbag module 12 on the cover 38 and the airbag 26 is, however, slightly modified. The cover 38 is provided on each of its webs 40 with a substantially horizontally extending hole 46. The two holes 46 lie opposite one another, so that a rod 48 may be pushed in manually or automatically. Two through openings 50 are made in the tab 34 of the airbag 26, by means of which the tabs 34 may be threaded onto the rod 48 when the latter is pushed in.

The connection, made by the rod 48 and the through openings 50, between the cover 38 and the portion 32 of the airbag 26 creates a releasable connection by means of which the portion 32 in the device 10 can first be pulled away from the base plate 22, while it still remains possible for the portion 32 to be released from the cover 38 again once the airbag 26 has been folded. For the purpose of release, all that is necessary is for the rod 48 to be withdrawn from the two holes 46 in the webs 40 and from the two through openings 50 in the tab 34. The connection between the cover 38 and the airbag 26 is hence released again, and the airbag 26 can later on be unfolded in a safety-critical situation, independently of the cover 38.

Fig. 3 illustrates how the tab 34 of the airbag 26 is secured to the cover 38 with the aid of the rod 48 and hence to the holding device 44 while the airbag is being stretched out. Fig. 3 shows the process step during which the restraining tapes 30 are fully taut. During this process step, the outer sheath 28 of the airbag 26 still forms a peripheral folded layer. This folded layer is moved upwards (as seen in Fig. 3) into the interior of the tube 16 by a subsequent displacement of the tube 16. At the same time, the upper rim of the tube 16 is guided towards the webs 40 of the cover 38. As a result of a subsequent upward movement of the piston 18, the airbag 26 is laid in folds and compressed in the interior of the tube 16 and below the cover 38. At the end of the upward movement of the piston 18, the rod 48 is withdrawn from the holes 46, and finally the folded airbag 26 is pushed into the underside of the cover 38 by the piston 18. The airbag module 12 is pre-mounted with its folded airbag 26 and the cover 38.

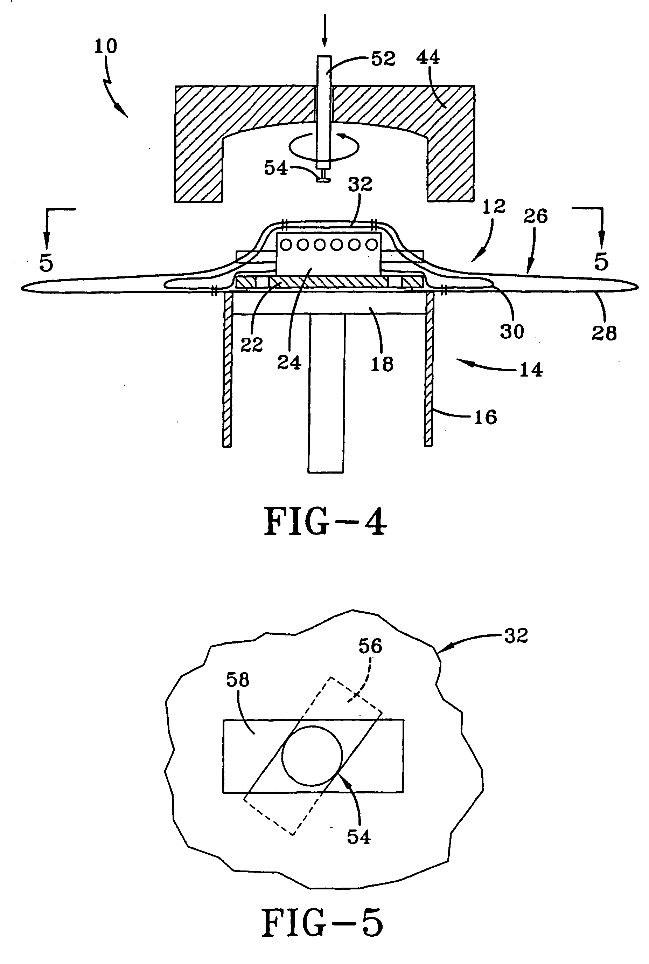

Fig. 4 illustrates another example of a device 10 not forming part of the present invention. The device is shaped in manner corresponding to the devices 10 illustrated in Figs. 1 to 3 as regards the receiver 14. As regards the holding device 44, however, no cover 38 is provided in the case of the device 10 according to Fig. 4. Instead, the holding device 44 is constructed in a shape that corresponds to the underside of a cover 38 of an airbag module 12.

A substantially vertically arranged pin 52 passes through the centre of the holding device 44, and a hook element 54 is constructed on the underside thereof. The hook element 54 has two hook wings 56 which are opposite one another and extend substantially horizontally. An elongate opening 58, below which a fabric layer of the restraining tapes 30 is also located, is constructed in the outer sheath 28 of the airbag 26 of an associated airbag module 12.

In the device 10 illustrated in Figs. 4 and 5 for folding the airbag 26, a releasable connection is made between the holding device 44 and the portion 32 of the airbag 26 in that the pin 52, by means of its hook wings 56 on the hook element 54, is first pushed through the opening 58 in the outer sheath 28 and then turned through an angle of approximately 90°. During this turning movement, the hook wings 56 are pushed underneath the outer sheath 28 in the portion 32. When the receiver 14 is subsequently moved relative to the holding device 44, the portion 32 is secured to the holding device 44 with the aid of the hook element 54 and is hence pulled away from the base plate 22 to stretch out the airbag 26.

The procedure of folding the airbag 26 is performed as illustrated in particular in Fig. 3. At the end of the folding procedure, the pin 52 is again turned through an angle of approximately 90°, as a result of which the hook wings 56 of the hook element 54 are brought into congruence with the elongate opening 58 in the outer sheath 28. The airbag module 12, together with its folded airbag 26, can now be moved out of the holding device 44 because the connection between the hook element 54 and the portion 32 of the airbag 26 is then undone again. The airbag module 12, together with its folded airbag 26, can be further installed.

In another example of a device for folding an airbag of an airbag module, which is not illustrated, a cover is provided through which a pin 52 illustrated in Figs. 4 and 5 can be introduced. With the aid of hook wings 56 on the pin 52, the airbag can then be stretched out underneath the cover. Then the pin 52 is released from the airbag again and withdrawn from the cover. The opening required in the cover is closed for example using an emblem of a vehicle manufacturer. Alternatively or in addition to a rotary pin 52, a rotary and/or pivotal hook may also be provided.

## Claims

1. A process for folding an airbag (26) of an airbag module (12), having the steps of:
arranging the airbag (26) and a base plate (22) on a receiver (14) of a folding device (10), with the airbag (26) secured to the base plate (22), and stretching the airbag (26) out,
arranging a cover (38) of the airbag module (12) on a holding device (44) of the folding device (10),
a first connection element (42, 48) being arranged on the cover (38), a second connection element (34) comprising at least one opening (36, 50) being provided on a portion (32) of the airbag (26) remote from the base plate (22)
introducing the first connection element in the form of a rod (48) or a hook (42) into the at least one opening (36, 50) of the second connection element (34) thereby securing the portion (32) of the airbag (26) to the cover (38) of the airbag module (12), and
stretching out the airbag (26) by pulling the secured portion (32) by means of a movement of the holding device (44) relative to the receiver (14), the receiver (14) having a substantially vertically arranged cylinder or tube (16) and a piston or die (18) arranged displaceably therein, the holding device (44) being movable substantially vertically relative to the receiver (14).

2. A process for folding an airbag according to Claim 1, **characterised by** the step of arranging an inflator connected to the base plate (22) on the receiver (14) before the step of stretching out the airbag (26).

3. A process for folding an airbag according to Claim 1 or 2, **characterised by** the step of releasing the connection at the end of the step or after the step of stretching out the airbag (26).

4. A process for folding an airbag according to Claim 3, **characterised by** the step of withdrawing a first connection element (48) between the airbag (26) and the holding device (44).

5. A folding device which is adapted to perform the process for folding an airbag according to one of Claims 1 to 4.

6. An airbag module (12) having a base plate (22) and an airbag (26) secured to the latter, wherein
the airbag (26) is adapted to be releasably securable to a first connection element (42, 48) arranged on a cover (38) arranged on a folding device (10) by a second connection element (34, 36, 50) being provided on a portion (32) of the airbag (26) remote from the base plate (22),
this second connection element being shaped such that by means of the first and second connection elements the portion (32) of the airbag (26) is to be pulled relative to the base plate (22) and hence stretched out, and
the second connection element is constructed with at least one opening (36, 50) made in the airbag (26) into which a first connection element in the form of a rod (48) or a hook (42) may be introduced.

7. An airbag module according to Claim 6, **characterised in that** an inflator is connected to the base plate (22) before the airbag (26) is stretched out.

8. An airbag module according to one of Claims 6 to 7, **characterised in that** a cover (38) is provided on which the first connection element (42, 48) is arranged

9. An airbag module according to Claim 8, **characterised in that** the first connection element (42, 48) is guided or arranged as one piece on the cover (38).

10. An airbag module according to one of Claims 6 to 9, **characterised in that** the connection between the first and the second connection element is made releasable such that it is released automatically when the airbag (26) is activated

11. An airbag module according to Claim 10, **characterised in that** on activation a hook (42), as the first connection element, is torn out of an opening (36), as the second connection element.

## Patentansprüche

1. Verfahren zum Falten eines Gassacks (26) eines Airbagmoduls (12) mit den Schritten:
Anordnen des Gassacks (26) und einer Grundplatte (22) an einer Aufnahme (14) einer Faltvorrichtung (10), wobei der Gassack (26) an der Grundplatte (22) befestigt ist, und Strecken des Gassacks (26),
Anordnen einer Abdeckung (38) des Airbagmoduls (12) an einer Halteeinrichtung (44) der Faltvorrichtung (10),
ein erstes Verbindungselement (42, 48), das an der Abdeckung (38) angeordnet ist, ein zweites Verbindungselement (34), das zumindest eine Öffnung (36, 50) umfasst, die an einem Abschnitt (32) des Gassacks (26) abgewandt von der Grundplatte (22) vorgesehen ist,
Einführen des ersten Verbindungselements in Gestalt einer Stange (48) oder eines Hakens (42) in die zumindest eine Öffnung (36, 50) des zweiten Verbindungselements (34), wodurch der Abschnitt (32) des Gassacks (25) an der Abdeckung (38) des Airbagmoduls (12) befestigt wird, und
Strecken des Gassacks (26) durch Ziehen des befestigten Abschnitts (32) mittels einer Bewegung der Halteeinrichtung (44) relativ zur Aufnahme (14), wobei die Aufnahme (14) einen im Wesentlichen vertikal angeordneten Zylinder oder ein im Wesentlichen vertikal angeordnetes Rohr (16) und einen Kolben oder einen Stempel (18) darin verschiebbar angeordnet aufweist, wobei die Halteeinrichtung (44) im Wesentlichen vertikal relativ zur Aufnahme (14) bewegbar ist.

2. Verfahren zum Falten eines Gassacks nach Anspruch 1, **gekennzeichnet durch** den Schritt des Anordnens eines mit der Grundplatte (22) verbundenen Gasgenerators an der Aufnahme (14) vor dem Schritt des Streckens des Gassacks (26).

3. Verfahren zum Falten eines Gassacks nach Anspruch 1 oder 2, **gekennzeichnet durch** den Schritt des Lösens der Verbindung am Ende des Schritts oder nach dem Schritt des Streckens des Gassacks (26).

4. Verfahren zum Falten eines Gassacks nach Anspruch 3, **gekennzeichnet durch** den Schritt des Herausziehens eines ersten Verbindungselements (48) zwischen dem Gassack (26) und der Halteeinrichtung (44).

5. Faltvorrichtung, die angepasst ist, um das Verfahren zum Falten eines Gassacks nach einem der Ansprüche 1 bis 4 auszuführen.

6. Airbagmodul (12) mit einer Grundplatte (22) und einem an dieser befestigten Gassack (26), bei dem
der Gassack (26) angepasst ist, an einem ersten Verbindungselement (42, 48), das an einer an einer Faltvorrichtung (10) angeordneten Abdeckung (38) angeordnet ist, lösbar befestigbar zu sein, indem an einem von der Grundplatte (22) abgewandten Abschnitt (32) des Gassacks (26) ein zweites Verbindungselement (34, 36, 50) vorgesehen ist,
wobei dieses zweite Verbindungselement derart gestaltet ist, dass mit dem ersten und zweiten Verbindungselement der Abschnitt (32) des Gassacks (26) relativ zur Grundplatte (22) zu ziehen und damit zu strecken ist, und
das zweite Verbindungselement mit zumindest einer am Gassack (26) ausgebildeten Öffnung (36, 50) konstruiert ist, in die ein erstes Verbindungselement in Gestalt einer Stange (48) oder eines Hakens (42) einführbar ist.

7. Airbagmodul nach Anspruch 6, **dadurch gekennzeichnet, dass** mit der Grundplatte (22) vor einem Strecken des Gassacks (26) ein Gasgenerator verbunden ist.

8. Airbagmodul nach einem der Ansprüche 6 bis 7, **dadurch gekennzeichnet, dass** eine Abdeckung (38) vorgesehen ist, an der das erste Verbindungselement (42, 48) angeordnet ist.

9. Airbagmodul nach Anspruch 8, **dadurch gekennzeichnet, dass** das erste Verbindungselement (42, 48) an der Abdeckung (38) geführt oder einstückig angeordnet ist.

10. Airbagmodul nach einem der Ansprüche 6 bis 9, **dadurch gekennzeichnet, dass** die Verbindung zwischen dem ersten und dem zweiten Verbindungselement derart lösbar gestaltet ist, dass sie sich bei einem Aktivieren des Gassacks (26) selbsttätig löst.

11. Airbagmodul nach Anspruch 10, **dadurch gekennzeichnet, dass** beim Aktivieren ein Haken (42) als erstes Verbindungselement an einer Öffnung (36) als zweites Verbindungselement ausreißt.

## Revendications

1. Procédé de pliage d'un coussin d'air (26) d'un module de coussin d'air (12), ayant les étapes consistant à:
disposer le coussin d'air (26) et une plaque de base (22) sur un récepteur (14) d'un dispositif de pliage (10), le coussin d'air (26) étant fixé à la plaque de base (22), et tendre le coussin d'air (26),
disposer un couvercle (38) du module de coussin d'air (12) sur un dispositif de support (44) du dispositif de pliage (10),
un premier élément de connexion (42, 48) étant disposé sur le couvercle (38), un second élément de connexion (34) comprenant au moins une ouverture (36, 50) prévue sur une partie (32) du coussin d'air (26) distante de la plaque de base (22),
introduire le premier élément de connexion sous la forme d'une tige(48) ou d'un crochet (42) dans l'au moins une ouverture (36, 50) du second élément de connexion (34), fixant ainsi la partie (32) du coussin d'air (26) au couvercle (38) du module de coussin d'air (12), et
tendre le coussin d'air (26) en tirant la partie fixée (32) au moyen d'un déplacement du dispositif de support (44) par rapport au récepteur (14), le récepteur (14) comportant un cylindre ou un tube disposé sensiblement verticalement (16) et un piston ou un poinçon (18) disposé à l'intérieur de celui-ci de manière déplaçable, le dispositif de support (44) étant déplaçable sensiblement verticalement par rapport au récepteur (14).

2. Procédé de pliage d'un coussin d'air selon la revendication 1, **caractérisé par** l'étape consistant à disposer un dispositif de gonflage raccordé à la plaque de base (22) sur le récepteur (14) avant l'étape d'extension du coussin d'air (26).

3. Procédé de pliage d'un coussin d'air selon la revendication 1 ou 2, **caractérisé par** l'étape consistant à libérer la connexion à la fin de l'étape ou après l'étape d'extension du coussin d'air (26).

4. Procédé de pliage d'un coussin d'air selon la revendication 3, **caractérisé par** l'étape consistant à rétracter un premier élément de connexion (48) entre le coussin d'air (26) et le dispositif de support (44).

5. Dispositif de pliage qui est conçu pour exécuter le procédé de pliage d'un coussin d'air selon l'une des revendications 1 à 4.

6. Module de coussin d'air (12) comportant une plaque de base (22) et un coussin d'air (26) fixé à cette dernière, dans lequel
le coussin d'air (26) est conçu pour être fixé de manière libérable à un premier élément de connexion (42, 48) disposé sur un couvercle (38) disposé sur un dispositif de pliage (10) par un second élément de connexion (34, 36, 50) prévu sur une partie (32) du coussin d'air (26) distante de la plaque de base (22),
le second élément de connexion étant conformé de sorte qu'au moyen des premier et second éléments de connexion, la partie (32) du coussin d'air (26) est destinée à être tirée par rapport à la plaque de base (22) et donc à être tendue, et
le second élément de connexion est construit en comprenant au moins une ouverture (36, 50) réalisée dans le coussin d'air (26) dans laquelle un premier élément de connexion sous la forme d'une tige (48) ou d'un crochet (42) peut être introduit.

7. Module de coussin d'air selon la revendication 6, **caractérisé en ce qu'**un dispositif de gonflage est raccordé à la plaque de base (22) avant que le coussin d'air (26) soit tendu.

8. Module de coussin d'air selon l'une des revendications 6 à 7, **caractérisé en ce qu'**il comprend un couvercle (38) sur lequel est disposé le premier élément de connexion (42, 48).

9. Module de coussin d'air selon la revendication 8, **caractérisé en ce que** le premier élément de connexion (42, 48) est guidé ou configuré comme une pièce sur le couvercle (38).

10. Module de coussin d'air selon l'une des revendications 6 à 9, **caractérisé en ce que** la connexion entre le premier et le second élément de connexion est rendue libérable de sorte qu'elle est libérée automatiquement lorsque le coussin d'air (26) est activé.

11. Module de coussin d'air selon la revendication 10, **caractérisé en ce que** lors de l'activation, un crochet (42), en tant que premier élément de connexion, est arraché d'une ouverture (36), en tant que second élément de connexion.
